# EUROPÄISCHE PATENTANMELDUNG

(11) **EP 4 538 624 A1**
(43) Veröffentlichungstag der Anmeldung: **16.04.2025**
(21) Anmeldenummer: 24193646.7
(22) Anmeldetag: 08.08.2024
(51) Int. Cl.: F27B 17/00, F27D 7/00, F27D 19/00

(54) **VERFAHREN ZUM BETREIBEN VON WENIGSTENS EINEM CHARGENOFEN MIT EINEM BESATZRAUM**

(30) Priorität: 12.10.2023 AT 508372023
(71) Anmelder: Wienerberger AG, 1100 Wien (AT)
(72) Erfinder: RATH, Johannes, 1100 Wien (AT); BOOT, Erik, 1100 Wien (AT); STREIBL, Bernhard, 1100 Wien (AT); VOGT, Stefan, 1100 Wien (AT)
(74) Vertreter: Gibler & Poth Patentanwälte KG

(57) **Zusammenfassung**

Es wird ein Verfahren zum Betreiben von wenigstens einem Chargenofen (1) mit einem Besatzraum (29) vorgeschlagen, wobei ein Gaseinlass (30) mit einer Zuleitung (2) und ein Gasauslass (31) mit einer Auslassleitung (3) verbunden ist, wobei die Zuleitung (2) mit einer Heißleitung (4), mit einer Kaltleitung (5) und über eine Rückführleitung (6) mit der Auslassleitung (3) verbunden ist, wobei in der Zuleitung (2) ein Betriebs-Gasstrom (32) gemäß einer Soll-Gastemperatur-Kurve (7) mittels einer Regeleinrichtung eingestellt wird, wobei der Betriebs-Gasstrom (32) einen Teil eines Gasstroms aus der Heißleitung (4) oder einen Teil eines Gasstroms aus der Kaltleitung (5) und einen Teil eines Gasstroms aus der Auslassleitung (3) umfasst, wobei der überschüssige Gasstrom in der Auslassleitung (3) der Heißleitung (4) zugeführt wird, wenn die Temperatur des Gasstroms in der Auslassleitung (3) in einem vorgebbaren Rückführ-Wertebereich liegt.

## Beschreibung

Die Erfindung betrifft ein Verfahren gemäß dem Oberbegriff des Patentanspruches 1.

Es ist bekannt, Chargenöfen und kontinuierlich betriebene Öfen zum Brennen von Formlingen, beispielsweise zur Herstellung von gebrannten keramischen Erzeugnissen, zu verwenden.

Dabei ist weiters bekannt, dass Chargenöfen bei der thermischen Behandlung von Gütern mehr Heizenergie benötigen, als kontinuierlich betriebene Öfen. Aus diesem Grund werden Chargenöfen für gewöhnlich nur zur Herstellung von hochwertigen Gütern eingesetzt. Es gibt jedoch auch Brennverfahren bei denen Chargenöfen verwendet werden müssen, um beispielsweise spezielle Eigenschaften an den Gütern herzustellen.

Aufgabe der Erfindung ist es daher ein Verfahren der eingangs genannten Art anzugeben, mit welchem die genannten Nachteile vermieden werden können, mit welchem ein Chargenofen energieeffizient betrieben werden kann.

Erfindungsgemäß wird dies durch die Merkmale des Patentanspruches 1 erreicht.

Dadurch ergibt sich der Vorteil, dass der Chargenofen, insbesondere mehrere miteinander wechselwirkende Chargenöfen, ähnlich energieeffizient betrieben werden können, wie kontinuierlich betriebene Öfen. Dadurch kann die Energie, welche bei dem Betrieb, insbesondere bei einem Brennen von Formlingen, freigesetzt wird, besonders effizient rückgewonnen werden. Durch die Verwendung von Leitungen auf unterschiedlichen Temperaturniveaus und die Verwendung der Gasströme in diesen Leitungen, kann die Menge an Energie, welche zum Heizen und Brennen einer Vielzahl an Formlingen aufzuwenden ist, gegenüber herkömmlichen Chargenöfen reduziert werden. Dadurch kann bereits lediglich ein Chargenofen sehr energieeffizient betrieben werden, wobei durch das erfindungsgemäße Verfahren insbesondere eine Mehrzahl an miteinander wechselwirkenden Chargenöfen über die Leitungen besonders energieeffizient betrieben werden können.

Die Erfindung betrifft weiters ein System gemäß dem Patentanspruch 10.

Die Erfindung hat daher weiters die Aufgabe ein System der eingangs genannten Art anzugeben, mit welchem die genannten Nachteile vermieden werden können, mit welchem wenigstens ein Chargenofen energieeffizient betrieben werden kann.

Erfindungsgemäß wird dies durch die Merkmale des Patentanspruches 10 erreicht.

Die Vorteile des Systems entsprechen den Vorteilen des oben genannten Verfahrens.

Die Unteransprüche betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste bevorzugte Ausführungsform des Systems umfassend drei Chargenöfen, eine Heißleitung, eine Kaltleitung und eine Abwärmeleitung,
Fig. 2 ein erstes Temperatur-Zeit-Diagramm bei dem Betrieb eines Chargenofens umfassend eine Soll-Gastemperaturkurve, einen Temperaturverlauf einer ersten gemittelten Oberflächentemperatur an einem ersten Ende eines Formlingstapels und eine Gastemperatur-Kurve eines Gasstroms in der Auslassleitung,
Fig. 3 ein zweites Temperatur-Zeit-Diagramm für den Betrieb von drei Chargenöfen in schematischer Darstellung,
Fig. 4 eine zweite bevorzugte Ausführungsform des Systems umfassend fünf Chargenöfen, eine Heißleitung, eine erste Mitteltemperaturleitung, eine Kaltleitung und eine Abwärmeleitung,
Fig. 5 eine erste schematische Darstellung des Systems umfassend einen Chargenofen, eine Heißleitung, eine erste Mitteltemperaturleitung, eine zweite Mitteltemperaturleitung, eine Kaltleitung und eine Rückführleitung,
Fig. 6 eine zweite schematische Darstellung des Systems umfassend mehrere Chargenöfen, eine Heißleitung, eine erste Mitteltemperaturleitung und eine zweite Mitteltemperaturleitung,
Fig. 7 eine bevorzugte Ausführungsform eines Besatzraums eines Chargenofens mit einem in dem Besatzraum angeordneten Formlingstapel.

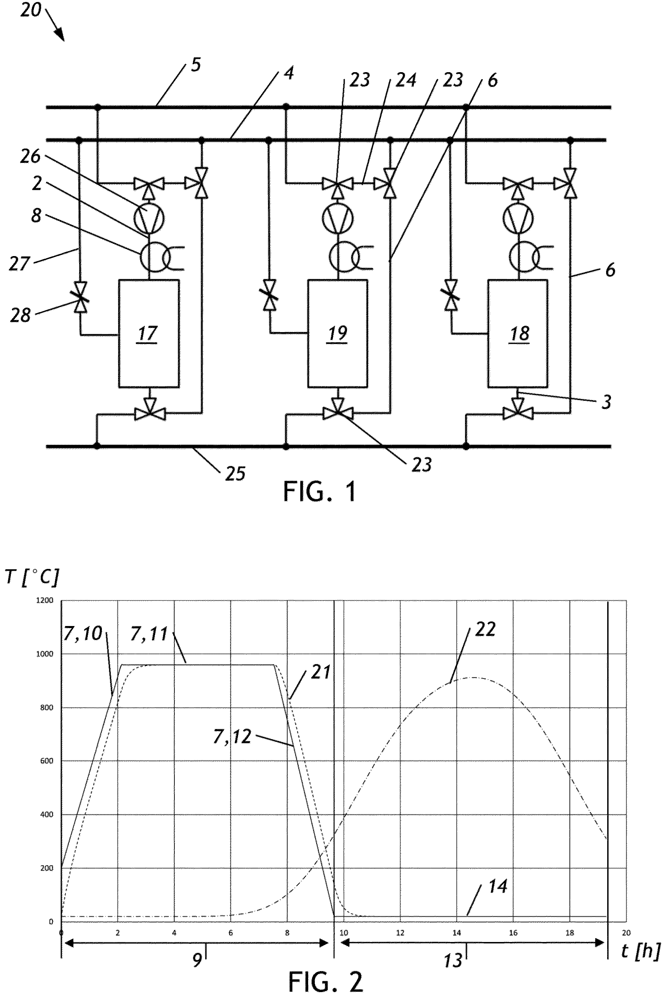

Die Fig. 1 und 4 bis 7 zeigen zumindest Teile eines Systems 20 umfassend wenigstens einen Chargenofen 1 mit einem Besatzraum 29 und eine Regeleinrichtung, wobei der Besatzraum 29 des Chargenofens 1 einen Gaseinlass 30 und einen Gasauslass 31 aufweist, wobei der Gaseinlass 30 mit einer Zuleitung 2 und der Gasauslass 31 mit einer Auslassleitung 3 verbunden ist, wobei die Zuleitung 2 mit einer Heißleitung 4, mit einer Kaltleitung 5 und über eine Rückführleitung 6 mit der Auslassleitung 3 verbunden ist, wobei die Regeleinrichtung dazu ausgebildet ist den Chargenofen 1 nach dem erfindungsgemäßen Verfahren zu betreiben.

Weiters ist ein Verfahren zum Betreiben des wenigstens einen Chargenofen 1 mit einem Besatzraum 29 vorgesehen, wobei der Besatzraum 29 des Chargenofens 1 den Gaseinlass 30 und den Gasauslass 31 aufweist, wobei der Gaseinlass 30 mit der Zuleitung 2 und der Gasauslass 31 mit der Auslassleitung 3 verbunden ist, wobei die Zuleitung 2 mit der Heißleitung 4, mit der Kaltleitung 5 und über die Rückführleitung 6 mit der Auslassleitung 3 verbunden ist, wobei in der Zuleitung 2 ein Betriebs-Gasstrom 32 gemäß einer Soll-Gastemperatur einer Soll-Gastemperatur-Kurve 7 mittels der Regeleinrichtung eingestellt wird,
wobei der Betriebs-Gasstrom 32 umfasst:
   a. einen Teil eines Gasstroms aus der Heißleitung 4 und einen Teil eines Gasstroms aus der Auslassleitung 3, wenn die Soll-Gastemperatur zwischen der Temperatur des Gasstroms in der Heißleitung 4 und der Temperatur des Gasstroms in der Auslassleitung 3 ist,
      oder
   b. einen Teil eines Gasstroms aus der Heißleitung 4 und einen Teil eines Gasstroms aus der Auslassleitung 3, wenn die Soll-Gastemperatur zumindest höher als die Temperatur des Gasstroms in der Heißleitung 4 und der Temperatur des Gasstroms in der Auslassleitung 3 ist, wobei der Betriebs-Gasstrom 32 vor dem Zuführen in den Besatzraum 29 mittels einer Heizvorrichtung 8 für den Chargenofen 1 auf die Soll-Gastemperatur erhitzt wird,
      oder
   c. einen Teil eines Gasstroms aus der Kaltleitung 5 und einen Teil eines Gasstroms aus der Auslassleitung 3, wenn die Soll-Gastemperatur geringer als die Temperatur des Gasstroms in der Auslassleitung 3 ist,
wobei der überschüssige Gasstrom in der Auslassleitung 3 der Heißleitung 4 zugeführt wird, wenn die Temperatur des Gasstroms in der Auslassleitung 3 in einem vorgebbaren Rückführ-Wertebereich liegt.

Dadurch ergibt sich der Vorteil, dass der Chargenofen 1, insbesondere mehrere miteinander wechselwirkende Chargenöfen 1, ähnlich energieeffizient betrieben werden können, wie kontinuierlich betriebene Öfen. Dadurch kann die Energie, welche bei dem Betrieb, insbesondere bei einem Brennen von Formlingen 36, freigesetzt wird, besonders effizient rückgewonnen werden. Durch die Verwendung von Leitungen 3, 4, 5 auf unterschiedlichen Temperaturniveaus und die Verwendung der Gasströme in diesen Leitungen, kann die Menge an Energie, welche zum Heizen und Brennen einer Vielzahl an Formlingen 36 aufzuwenden ist, gegenüber herkömmlichen Chargenöfen reduziert werden. Dadurch kann bereits lediglich ein Chargenofen 1 sehr energieeffizient betrieben werden, wobei durch das erfindungsgemäße Verfahren insbesondere eine Mehrzahl an miteinander wechselwirkenden Chargenöfen 1 über die Leitungen besonders energieeffizient betrieben werden können.

Ein Chargenofen 1 ist ein Ofen zum Brennen von Formlingen 36, insbesondere von keramischen Formlingen 36. Bevorzugt ist der Chargenofen 1 zum Brennen von Ziegelformlingen ausgebildet. Bevorzugt können die Formlinge 36, Formlinge 36 von Mauerziegeln, Klinker, Verblender und/oder Dachziegeln sein. Ein Formling 36 ist ein hergestelltes Gut mit einer gewünschten Form, welches nach der Ausbildung der Form in dem Chargenofen 1 thermisch behandelt, insbesondere gebrannt, werden kann.

Bevorzugt umfasst der Chargenofen 1 einen Besatzraum 29 zum Brennen der Formlinge 36. Bevorzugt können die Formlinge 36 den Besatzraum 29 über eine Klappe zugefügt werden. Während des Brennens der Formlinge 36 in dem Besatzraum 29 verweilen die Formlinge 36 insbesondere ortsfest.

Bevorzugt kann der Chargenofen 1 auch als Kammerofen bezeichnet werden.

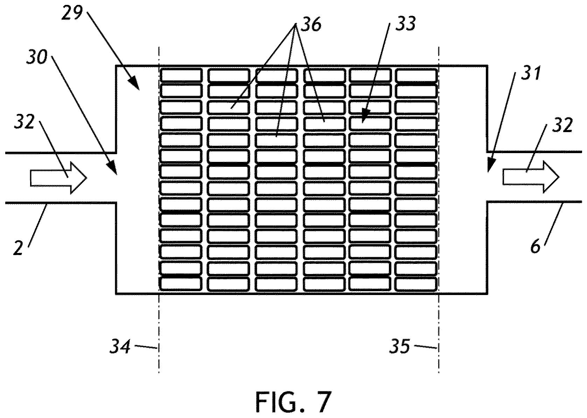

Bevorzugt umfasst der, insbesondere jeder, Chargenofen 1 einen Gaseinlass 30 und eine Gasauslass 31. Der Gaseinlass 30 und der Gasauslass 31 sind derart ausgebildet, dass ein Gasstrom über den Gaseinlass 30 in den Besatzraum 29 gelangen kann und über den Gasauslass 31 den Besatzraum 29 verlassen kann. Dies ist beispielhaft in der Fig. 7 mittels der Pfeile, auf welches das Bezugszeichen 7 zeigt, gezeigt.

Der Gaseinlass 30 des Chargenofens 1 ist mit einer Zuleitung 2 verbunden. Bevorzugt ist in der Zuleitung 2 des Chargenofens 1, insbesondere am Gaseinlass 30, ein Temperatursensor angeordnet. Bevorzugt kann die Regeleinrichtung den Temperatursensor zum Einstellen des Betriebs-Gasstroms 32 verwenden.

Es ist vorgesehen, dass die Zuleitung 2 mit einer Heißleitung 4, mit einer Kaltleitung 5 und über eine Rückführleitung 6 mit der Auslassleitung 3 verbunden ist.

Die Kaltleitung 5 ist bevorzugt eine Leitung, in welcher ein Gasstrom mit einer niedrigen Temperatur strömt. Bevorzugt kann die Kaltleitung 5 auch als Frischluftleitung bezeichnet werden. Beispielweise kann die Temperatur des Gasstroms in der Kaltleitung 5 einer Außentemperatur oder einer Umgebungstemperatur an dem Ort des Chargenofens 1 entsprechen. Dabei kann beispielsweise bei dem Betrieb des Chargenofens 1 in einer Fabrikhalle, die Luft außerhalb der Fabrikhalle angesaugt und in die Kaltleitung 5 gepumpt werden. Hierfür kann beispielsweise ein Ventilator verwendet werden.

Besonders bevorzugt kann vorgesehen sein, dass die Soll-Gastemperatur-Kurve 7 eine aktive Brennphase 9 umfassend eine Aufheizzeit 10, eine Haltezeit 11 und eine Abkühlzeit 12 umfasst. Dadurch kann ein symmetrischer Verlauf der Brennkurve geschaffen werden, wodurch die Effizienz des Chargenofens 1, insbesondere die Kombination von mehreren Chargenöfen 1, welche miteinander wärmetechnisch gekoppelt sind, erhöht werden kann.

Bevorzugt kann die Soll-Gastemperatur-Kurve 7 einen zumindest teilweise trapezförmigen Verlauf umfassen. Bevorzugt kann die aktive Brennphase 9 einen im Wesentlichen trapezförmigen Verlauf aufweisen.

Bevorzugt wird in der Haltezeit 11 die Soll-Gastemperatur konstant gehalten.

Besonders bevorzug kann vorgesehen sein, dass die Aufheizzeit 10 und die Abkühlzeit 12 im Wesentlichen dieselbe Zeitdauer aufweisen. Dadurch kann ein besonders effizienter Betrieb des Chargenofens 1, insbesondere mehrerer Chargenöfen 1, erreicht werden.

Die Aufheizzeit 10, die Haltezeit 11 und die Abkühlzeit 12 sind dabei Zeitdauern mit vorgebbarer Länge. Dies ist beispielhaft in Fig. 2 gezeigt, wobei drei Temperaturverläufe ersichtlich sind. Die durchgehende Linie zeichnet dabei beispielhaft die Soll-Gastemperatur-Kurve 7 mit der aktiven Brennphase 9 und der passiven Brennphase 13. Weiters ist in der aktiven Brennphase 9 die Aufheizzeit 10, die Haltezeit 11 und die Abkühlzeit 12 der Soll-Gastemperatur-Kurve 7 ersichtlich. Die gepunktete Linie zeichnet dabei beispielhaft den Temperaturverlauf 21 einer ersten gemittelten Oberflächentemperatur an einem ersten Ende 34 des Formlingstapels 33. Die strichpunktierte Linie zeichnet dabei beispielhaft die Gastemperatur-Kurve 22 des Gasstroms in der Auslassleitung 3, also den Temperaturverlauf des abgeführten Betriebs-Gasstroms 32. Diese Gastemperatur-Kurve 22 des Gasstroms in der Auslassleitung 3 entspricht im Wesentlichen dem Temperaturverlauf einer zweiten gemittelten Oberflächentemperatur an einem zweiten Ende 35 des Formlingstapels 33.

Die Auslassleitung 3 ist bevorzugt eine Leitung, in welcher der Gasstrom strömt, der aus dem Gasauslass 31 des Besatzraums 29 abgeführt wird, also der abgeführte Betriebs-Gasstrom 32. Erfindungsgemäß steigt die Temperatur des Gasstroms in der Auslassleitung 3 mit der Zeit des Betriebs des Chargenofens 1 an. Dies ist beispielhaft in Fig. 2 anhand der sprichpunktierten Linie gezeigt. Bei dem in Fig. 2 gezeigten Diagramm wurde bei einem Chargenofen 1 ein geringer Randspalt zwischen den Formlingen 36 und der Besatzraumumwandung ausgebildet, sodass der Großteil des Betriebs-Gasstroms 32 gezwungen wurde durch Kanäle der Formlinge 36 zu strömen und nicht zwischen den Formlingen 36 und der Besatzraumumwandung vorbeiströmen konnte. Die Formlinge 36 waren dabei Ziegelformlinge. Wie in Fig. 2 ersichtlich ist, steigt die Temperatur des Gasstroms in der Auslassleitung 3 mit der Zeit an. In den ersten sechs gezeigten Stunden des Diagramms, also vom Beginn des Brennvorganges bis zur Stunde sechs, ist die Temperatur des Gasstroms in der Auslassleitung 3 beinahe konstant. Erst ab der sechsten Stunde steigt die Temperatur des Gasstroms in der Auslassleitung 3 an. Dabei befindet sich die gezeigte Soll-Gastemperatur-Kurve 7 bereits in der Abkühlzeit 12. Die Temperatur des Gasstroms in der Auslassleitung 3 steigt mit der Zeit noch weiter an, wobei beispielsweise nach zehn Stunden Betriebszeit des Chargenofens 1 der Chargenofen 1 in der passiven Brennphase 13 betrieben wird. In der passiven Brennphase 13 wird die Soll-Gastemperatur in der Zuleitung 2 konstant gehalten. In dieser Phase wird durch die Energie der Formlinge 36 des Formlingstapels 33 die Temperatur des Betriebs-Gasstroms 32 erhöht. Dieser abgeführte Betriebs-Gasstrom 32, also der Gasstrom in der Auslassleitung 3, kann der Heißleitung 4 zugeführt werden.

Bevorzugt ist die Heißleitung 4 eine Leitung, in welcher ein Gasstrom mit einer hohen Temperatur strömt. Die Temperatur des Gasstroms in der Heißleitung 4 ist dabei höher als die Temperatur des Gasstroms in der Kaltleitung 5.

Erfindungsgemäß wird der überschüssige Gasstrom in der Auslassleitung 3 der Heißleitung 4 zugeführt. Der überschüssige Gasstrom ist dabei der Gasstrom, welcher nicht über die Rückführleitung 6 der Zuleitung 2 zugeführt wird oder aus der Auslassleitung 3 abgeführt wird. Die Zufuhr des überschüssigen Gasstroms in die Heißleitung 4 findet jedoch nur statt, wenn die Temperatur des Gasstroms in der Auslassleitung 3 in dem vorgebbaren Rückführ-Wertebereich liegt.

Bevorzugt ist in der Auslassleitung 3, insbesondere am Gasauslass 31, ein Temperatursensor angeordnet. Bevorzugt kann die Regeleinrichtung für die Regelung der Zufuhr des überschüssigen Gasstroms in der Auslassleitung 3 in die Heißleitung 4 den Temperatursensor in der Auslassleitung 3 verwenden.

Bevorzugt kann der vorgebbare Rückführ-Wertebereich ein Bereich zwischen mindestens Null Grad Celsius, insbesondere mindestens 200 Grad Celsius, vorzugsweise mindestens 400 Grad Celsius, besonders bevorzugt mindestens 600 Grad Celsius, und maximal 800 Grad Celsius, insbesondere maximal 600 Grad Celsius, vorzugsweise maximal 400 Grad Celsius, sein.

Besonders bevorzugt kann der überschüssige Gasstrom in der Auslassleitung 3 der Heißleitung 4 zugeführt werden, wenn die Differenz zwischen der Temperatur des Gasstroms in der Auslassleitung 3 und der Temperatur des Gasstroms in der Heißleitung 4 in dem vorgebbaren Rückführ-Wertebereich liegt. Dabei ist bei der Bestimmung des Rückführ-Wertebereichs der Minuend die Temperatur des Gasstroms in der Auslassleitung 3 und der Subtrahend die Temperatur des Gasstroms in der Heißleitung 4. Dadurch kann sichergestellt werden, dass der Heißleitung 4 nur ein Gasstrom zugeführt wird, wenn dieser eine bestimmte Temperatur aufweist. Beispielsweise kann dadurch, wie in Fig. 2 ersichtlich, der Gasstrom in der Auslassleitung 3 in der aktiven Brennphase 9 des Chargenofens 1 abgeführt werden, weil der Gasstrom sonst die Temperatur des Gasstroms in der Heißleitung 4 reduzieren würde. Im Unterschied dazu kann der überschüssige Gasstrom in der Auslassleitung 3 der Heißleitung 4 in der passiven Brennphase 13 des Chargenofens 1 zugeführt werden. Beispielsweise kann hierbei der Gasstrom in der Heißleitung 4 eine Temperatur von 400 Grad Celsius aufweisen. Wie in Fig. 2 ersichtlich ist, weist die Temperatur des Gasstroms in der Auslassleitung 3 nach zehn Stunden Betriebszeit eine Temperatur von 400 Grad Celsius auf. Somit weisen der Minuend und der Subtrahend jeweils eine Temperatur von 400 Grad Celsius auf, sodass die Differenz Null ergibt. Sofern der Rückfuhr-Wertebereich beispielsweise von Null bis 200 Grad Celsius reicht, wird der Heißleitung 4 der überschüssige Gasstrom in der Auslassleitung 3 bis zu einer Temperatur des Gasstroms in der Auslassleitung 3 von 600 Grad Celsius zugeführt.

Durch das Zuführen der Wärme des Gasstroms aus der Auslassleitung 3 des Chargenofens 1 in die Heißleitung 4 ist die Temperatur des Gasstroms in der Heißleitung 4 nicht konstant. Daher kann der Rückführ-Wertebereich bevorzugt auch als Soll-Temperatur-Bereich der Heißleitung 4 verstanden werden. Beispielsweise derart, dass der Gasstrom in der Heißleitung 4 beispielsweise eine Soll-Temperatur von 450 Grad Celsius aufweisen soll und der überschüssige Gasstrom der Heißleitung 4 zugeführt wird, wenn dieser zwischen 400 Grad Celsius und 500 Grad Celsius ist. Dadurch kann mit dem Rückführ-Wertebereich ein Bereich von 100 Grad Celsius vorgegeben werden, sodass der Gasstrom in der Heißleitung 4 in diesem Bereich liegt und nicht durch weiteres Zuführen des überschüssigen Gasstroms aus der Auslassleitung 3 diesen Bereich überschreitet oder unterschreitet. In diesem Fall wäre der Rückführ-Wertebereich zwischen 400 Grad Celsius und 500 Grad Celsius bzw. bei der oben beschriebenen Differenz zwischen der Temperatur des Gasstroms in der jeweiligen Auslassleitung 3 und der Temperatur des Gasstroms in der Heißleitung 4 zwischen Minus 50 Grad Celsius und 50 Grad Celsius.

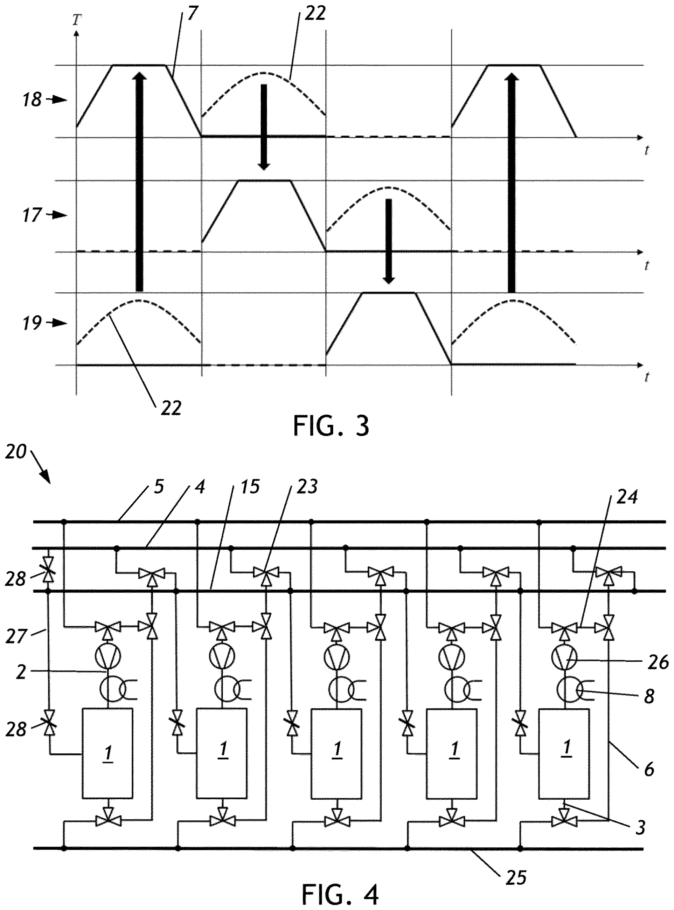

Bevorzugt sind die Leitungen über Ventile 23 miteinander verbunden. Dies ist beispielhaft in Fig. 1 und 4 ersichtlich. Dabei ist ersichtlich, dass die Heißleitung 4, die Rückführleitung 6 und ein Zwischenstück 24 über ein Ventil 23 miteinander verbunden sind. Weiters ist ersichtlich, dass das Zwischenstück 24 mit der Kaltleitung 5 und mit der Zuleitung 2 über ein Ventil 23 miteinander verbunden sind. Weiters ist ersichtlich, dass die Auslassleitung 3 mittels eines Ventils 23 mit der Rückführleitung 6 und mit einer Abwärmeleitung 25 verbunden ist.

Bevorzugt kann das Ventil 23 ein Drei-Wege-Ventil sein.

Es ist vorgesehen, dass das System 20 die Regeleinrichtung umfasst. Bei dem erfindungsgemäßen Verfahren wird der Betriebs-Gasstrom 32 mittels der Regeleinrichtung eingestellt. Die Regeleinrichtung stellt dabei den Betriebs-Gasstrom 32 in der Zuleitung 2 gemäß der Soll-Gastemperatur der Soll-Gastemperatur-Kurve 7 ein. In Fig. 2 ist die Soll-Gastemperatur-Kurve 7 gezeigt, wobei ersichtlich ist, dass die Soll-Gastemperatur-Kurve 7 die Aufheizzeit 10, die Haltezeit 11, die Abkühlzeit 12 und die Kühlzeit 14 umfasst. Weiters ist in Fig. 2 etwas zeitversetzt zu der Soll-Gastemperatur-Kurve 7 der Temperaturverlauf 21 der ersten gemittelten Oberflächentemperatur des Formlingstapels 33 an dem ersten Ende 34 gezeigt.

Nachfolgend wird die Einstellung des Betriebs-Gasstroms 32 anhand der Varianten a bis c genauer erläutert. Beispielsweise kann die Temperatur des Gasstroms in der Heißleitung 400 Grad Celsius betragen. Die Regeleinrichtung stellt dabei den Betriebs-Gasstrom 32 gemäß Alternative a ein. Sobald die Soll-Gastemperatur höher als die Temperatur des Gasstroms in der Heißleitung 4 ist, also beispielsweise, wenn die Temperatur des Gasstroms in der Heißleitung 4 bei 400 Grad Celsius ist und die Sollgastemperatur bei 410 Grad Celsius ist, stellt die Regeleinrichtung den Betriebs-Gasstrom 32 gemäß Alternative b ein. In diesem Fall wird der Betriebs-Gasstrom 32 vor dem Zuführen in den Besatzraum 29 mittels der Heizvorrichtung 8 für den Chargenofen 1 auf die Soll-Gastemperatur erhitzt. Die Heizvorrichtung 8 ist in Fig. 1 beispielhaft gezeigt. Sobald die Soll-Gastemperatur niedriger als die Temperatur des Gasstroms in der Auslassleitung 3 ist, stellt die Regeleinrichtung den Betriebs-Gasstrom 32 gemäß Variante c ein. Dies ist beispielsweise in Fig. 2 am Ende der Abkühlzeit 12 der Fall. Zu Beginn der Abkühlzeit 12 kann die Soll-Gastemperatur noch durch eine Mischung der Gasströme aus der Auslassleitung 3 und aus der Heißleitung 4, erreicht werden, wobei erforderlichenfalls mittels der Heizvorrichtung 8 zugeheizt wird. Sobald jedoch der Gasstrom in der Auslassleitung 3 zu heiß wird, kann die Soll-Gastemperatur ohne Teil eines Gasstroms aus der Kaltleitung 5 nicht mehr erreicht werden. Daher stellt die Regeleinrichtung den Betriebs-Gasstrom 32 gemäß Variante c ein.

Erfindungsgemäß umfasst der Betriebs-Gasstrom 32 die Alternativen a bis c. Bevorzugt kann der Betriebs-Gasstrom 32 weitere Alternativen umfassen. Dabei kann der Betriebs-Gasstrom 32 beispielsweise umfassen: einen Teil eines Gasstroms aus der Heißleitung 4 und einen Teil eines Gasstroms aus der Auslassleitung 3, wenn die Soll-Gastemperatur zwischen der Temperatur des Gasstroms in der Heißleitung 4 und der Temperatur des Gasstroms in der Auslassleitung 3 ist, wobei der Betriebs-Gasstrom 32 vor dem Zuführen in den Besatzraum 29 mittels der Heizvorrichtung 8 für den Chargenofen 1 auf die Soll-Gastemperatur erhitzt wird. In diesem Fall ist daher auch ein zusätzlichen Aufheizen des Betriebs-Gasstroms 32 möglich, selbst wenn die Soll-Gastemperatur durch ein Mischen der Gasströme aus der Auslassleitung 3 und der Heißleitung 4 erreichbar ist. Beispielsweise, dass für den Betriebs-Gasstrom 90 Prozent aus der Heißleitung 4 und 10 Prozent aus der Auslassleitung 3 genommen wird und der Betriebs-Gasstroms 32 zusätzlich mittels der Heizvorrichtung 8 auf die Soll-Gastemperatur erhitzt wird.

Bevorzugt kann erfindungsgemäß der Betriebs-Gasstrom 32 auch einen Teil eines Gasstroms umfassen kann, welcher Null ist. Beispielsweise kann bei der Alternative b lediglich ein Teil des Gasstroms aus der Heißleitung 4 verwendet werden und dieser mittels der Heizvorrichtung 8 auf die Soll-Gastemperatur erhitzt werden. In diesem Fall wäre daher der Teil des Gasstroms aus der Auslassleitung 3 Null. Dadurch wird ein effizienter Betrieb des Chargenofens 1 gewährleistet, da nicht durch eine Mischung eines Gasstroms mit niedrigerer Temperatur die Temperatur des Betriebs-Gasstrom 32 reduziert wird.

Besonders bevorzugt kann vorgesehen sein, dass bei der Einstellung des Betriebs-Gasstroms 32 die Steigung der Soll-Gastemperatur in der Soll-Gastemperatur-Kurve 7 berücksichtigt wird. Dadurch kann beispielsweise die Regeleinrichtung berücksichtigen, ob in der aktiven Brennphase 9 die Aufheizzeit 10 oder die Abkühlzeit 12 vorliegt. Beispielsweise könnte der Gasstrom in der Auslassleitung 3 eine Temperatur von 800 Grad Celsius und der Gasstrom in der Heißleitung 4 eine Temperatur von 700 Grad Celsius aufweisen. Weiters könnte dabei die Soll-Gastemperatur bei 750 Grad Celsius sein. In diesem Fall könnte die Regeleinrichtung die Alternativen a und c verwenden. Durch die Berücksichtigung der Steigung der Soll-Gastemperatur in der Soll-Gastemperatur-Kurve 7 kann der Betriebs-Gasstrom 32 möglichst effizient gewählt werden.

Besonders bevorzugt kann vorgesehen sein, dass der Betriebs-Gasstrom 32 durch einen in dem Besatzraum 29 angeordneten Formlingstapel 33 strömt und mit dem Formlingstapel 33 Wärme austauscht, wobei der Formlingstapel 33 eine erste gemittelte Oberflächentemperatur an einem dem Gaseinlass 30 zugewandten ersten Ende 34 und eine zweite gemittelte Oberflächentemperatur an einem dem Gasauslass 31 zugewandten zweiten Ende 35 aufweist, wobei die Ausbildung des Formlingstapels 33 derart gewählt wird, dass die maximale zweite gemittelte Oberflächentemperatur um eine vorgebbare Brennvorgangszeit später als die maximale erste gemittelte Oberflächentemperatur erreicht wird. Dadurch kann die Abgabe der Wärme an die Heißleitung 4 besonders effizient gesteuert werden, wodurch insbesondere wenigstens zwei Chargenöfen besonders energieeffizient wärmetechnisch miteinander gekoppelt werden können. Dadurch kann beispielsweise Wärme, welche von dem Formlingstapel 33 eines ersten Chargenofens 17 abgegeben wird, bei dem Brennvorgang eines zweiten Chargenofens 18 verwendet werden.

Während eines Brennvorgangs strömt der Betriebs-Gasstrom 32 durch den in dem Besatzraum 29 angeordneten Formlingstapel 33. Dies ist beispielhaft in Fig. 7 gezeigt. Während des Durchströmens des Formlingstapels 33 von dem Betriebs-Gasstrom 32 wird Wärme zwischen dem Formlingstapel 33, insbesondere den Formlingen 36 des Formlingstapels 33, und dem Betriebs-Gasstrom 32 ausgetauscht. Je nach Phase des Brennvorgangs wird hierbei Wärme von dem Betriebs-Gasstrom 32 auf die Formlinge 36 übertragen oder Wärme von den Formlingen 36 auf den Betriebs-Gasstrom 32 übertragen.

Dabei wird die Ausbildung des Formlingstapels 33 derart gewählt, dass die maximale zweite gemittelte Oberflächentemperatur um eine vorgebbare Brennvorgangszeit später erreicht wird, als die maximale erste gemittelte Oberflächentemperatur. Dies kann beispielsweise durch eine dichte Stapelung des Formlingstapels 33 in dem Besatzraum 29 erreicht werden. Beispielsweise wenn ein geringer Randspalt zwischen dem Formlingstapel 33 und der Besatzraumumwandung ausgebildet wird. Weiters kann dies auch durch eine Stapelung mittels speziell ausgebildeter Strömungskanäle in dem Formlingstapel 33 erreicht werden.

Besonders bevorzugt kann vorgesehen sein, dass in dem Besatzraum 29 mit dem Formlingstapel 33 ein maximaler hydraulischer Durchmesser eines Strömungskanals maximal das 10-fache, bevorzugt maximal das 5-fache, besonders bevorzugt maximal das 3-fache, der gemittelten hydraulischen Durchmesser der Strömungskanals ist. Die Strömungskanäle können hierbei der Randspalt, Kanäle zwischen den einzelnen Formlingen sowie Kanäle durch die Formlinge, beispielsweise bei Lochziegel, sein. Durch das Vermeiden zu großer Unterschiede in den hydraulischen Durchmessern der einzelnen Strömungskanäle kann erreicht werden, dass der Betriebs-Gasstrom 32 gleichmäßig den Formlingstapel 33 durchströmt und nicht an diesem vorbei strömt, wodurch eine sehr gute Wärmeübertragung zwischen dem Formlingstapel 33 und dem Betriebs-Gasstrom 32 erreicht werden kann.

Durch diese spezielle Ausbildung des Formlingstapels 33 wird während des Brennvorgangs an dem ersten Ende 34 des Formlingstapel 33 früher eine maximale gemittelte Oberflächentemperatur erreicht als an dem zweiten Ende 35 des Formlingstapels 33. In Fig. 7 ist beispielhaft das erste Ende 34 des Formlingstapels 33, welches erste Ende 34 dem Gaseinlass 30 zugewandt ist und das zweite Ende 35 des Formlingstapels 33, welches zweite Ende 35 dem Gasauslass 31 zugewandt ist, gezeigt.

Die jeweilige gemittelte Oberflächentemperatur an den Enden 34, 35 des Formlingstapels 33 kann beispielsweise durch mehrere an den Enden 34, 35 angebrachte Temperatursensoren ermittelt werden. Dabei kann bevorzugt der Mittelwert von den mit den angebrachten Temperatursensoren gemessenen Temperaturwerten gebildet werden.

Besonders bevorzugt kann vorgesehen sein, dass die Soll-Gastemperatur-Kurve 7 eine passive Brennphase 13 umfassend eine Kühlzeit 14 umfasst. Während in der aktiven Brennphase 9 Wärmeenergie durch den Betriebs-Gasstroms 32 in den Besatzraum 29, und damit auch in den Formlingstapels 33, eingebracht wird, wird in der passiven Brennphase kühle Luft in den Besatzraum 29 eingebracht, wobei sich die vorhandene Wärme aus der aktiven Brennphase 9 durch den Formlingstapel 33 bewegt und am Ende den Besatzraum 29 wieder verlässt. Dadurch kann die Wärme der Formlinge 36 in der Kühlzeit 14 besonders gut in die Heißleitung 4 rückgeführt werden.

Besonders bevorzugt kann vorgesehen sein, dass die Dauer der aktiven Brennphase 9 im Wesentlichen der Dauer der passiven Brennphase 13 entspricht. Dadurch kann ein besonders effizienter Betrieb des Chargenofens 1, insbesondere mehrerer miteinander gekoppelter Chargenöfen 1, erreicht werden.

Bei der Verwendung von wenigstens zwei Chargenöfen 1 kann besonders bevorzugt vorgesehen sein, dass der Brennvorgangsstartzeitpunkt eines zweiten Chargenofens 18, also der Zeitpunkt an dem der zweite Chargenofen 18 seinen Brennvorgang startet, später als der Brennvorgangsstartzeitpunkt eines ersten Chargenofens 17 gewählt wird. Dadurch kann der zweite Chargenofen 18 zumindest zeitweise einen Teil des abgeführten Betriebs-Gasstroms 32 aus der Auslassleitung 3 des ersten Chargenofens 17 verwenden.

Insbesondere kann vorgesehen sein, dass der Formlingstapel 33 mindestens 50%, bevorzugt mindestens 70%, besonders bevorzugt mindestens 90%, der gesamten Wärmeenergie des Betriebs-Gasstroms 32 während eines Brennvorganges aufnehmen kann.

Bevorzugt kann vorgesehen sein, dass das Verhältnis zwischen der Gesamtmasse des den Besatzraum 29 durchströmenden Betriebs-Gasstrom 32 und der Masse des Formlingstapels 33 in der aktiven Brennphase 9 mindestens 50%, bevorzugt mindestens 70%, besonders bevorzugt mindestens 90%, beträgt.

Bevorzugt kann vorgesehen sein, dass das Verhältnis zwischen der Gesamtmasse des den Besatzraum 29 durchströmenden Betriebs-Gasstrom 32 und der Masse des Formlingstapels 33 in der aktiven Brennphase 9 maximal 200%, bevorzugt maximal 140%, besonders bevorzugt maximal 110%, beträgt.

Bevorzugt kann vorgesehen sein, dass das Verhältnis zwischen der Gesamtmasse des den Besatzraum 29 durchströmenden Betriebs-Gasstrom 32 und der Masse des Formlingstapels 33 in der passiven Brennphase 13 mindestens 50%, bevorzugt mindestens 70%, besonders bevorzugt mindestens 90%, beträgt.

Bevorzugt kann vorgesehen sein, dass das Verhältnis zwischen der Gesamtmasse des den Besatzraum 29 durchströmenden Betriebs-Gasstrom 32 und der Masse des Formlingstapels 33 in der passiven Brennphase 13 maximal 200%, bevorzugt maximal 140%, besonders bevorzugt maximal 110%, beträgt.

Bevorzugt kann vorgesehen sein, dass das Verhältnis zwischen der Gesamtmasse des den Besatzraum 29 durchströmenden Betriebs-Gasstrom 32 in der aktiven Brennphase 9 zu der passiven Brennphase 13 mindestens 50%, bevorzugt mindestens 70%, besonders bevorzugt mindestens 90%, beträgt, und/oder maximal 200%, bevorzugt maximal 140%, besonders bevorzugt maximal 110%, beträgt.

Sofern die Formlinge 36 und das Gas des Betriebs-Gasstrom 32 eine ähnliche spezifische Wärmekapazität haben, kann durch eine geringe Abweichung des Verhältnisses der Gesamtmasse erreicht werden, dass Wärme in der aktiven Brennphase 9 gut von dem Betriebs-Gasstrom 32 an den Formlingstapel 33 abgegeben werden kann, und in der passiven Brennphase 13 von dem Formlingstapel 33 wieder aufgenommen werden.

Weiters kann vorgesehen sein, dass vor dem Gaseinlass 30 ein Wärmespeicher zum Temperaturausgleich vorgeschaltet ist.

Besonders bevorzugt kann vorgesehen sein, dass die Zuleitung 2 mit einer ersten Mitteltemperaturleitung 15 verbunden ist, wobei die Temperatur des Gasstroms in der ersten Mitteltemperaturleitung 15 geringer als die Temperatur des Gasstroms in der Heißleitung 4 und höher als die Temperatur des Gasstroms in der Kaltleitung 5 ist, wobei der Betriebs-Gasstrom 32 zusätzlich zu den Alternativen a bis c umfasst:
d. einen Teil eines Gasstroms aus der ersten Mitteltemperaturleitung 15 und einen Teil eines Gasstroms aus der Auslassleitung 3, wenn die Soll-Gastemperatur zwischen der Temperatur des Gasstroms in der ersten Mitteltemperaturleitung 15 und der Temperatur des Gasstroms in der Auslassleitung 3 ist,
wobei der überschüssige Gasstrom in der Auslassleitung 3 der ersten Mitteltemperaturleitung 15 zugeführt wird, wenn die Temperatur des Gasstroms in der Auslassleitung 3 in einem vorgebbaren weiteren Rückführ-Wertebereich liegt.

Dadurch kann die Regeleinrichtung den Betriebs-Gasstrom 32 gemäß weiterer Alternativen einstellen, wodurch insbesondere eine Mehrzahl an miteinander wärmetechnisch gekoppelter Chargenöfen 1 sehr energieeffizient betrieben werden können. Aber auch bei lediglich einem Chargenofen 1 konnten durch die Leitungen auf unterschiedlichen Wärmeniveaus Effizienzsteigerungen beobachtet werden.

In dieser bevorzugten Ausführungsform ist zusätzlich zu der Heißleitung 4 noch eine weitere Leitung, die erste Mitteltemperaturleitung 15, vorgesehen. In dieser bevorzugten Ausführungsform umfasst der Betriebs-Gasstrom 32 die Alternativen a bis d. Bis auf die zu berücksichtigende erste Mitteltemperaturleitung 15 funktioniert die Regelung des Betriebs-Gasstroms 32 auf die gleiche Weise wie bei dem oben beschriebenen Beispiel mit lediglich der Heißleitung 4. Auch die Wahl des weiteren Rückführ-Wertebereichs erfolgt auf die gleiche Weise, wie bei dem oben beschriebenen Rückführ-Wertebereich, sodass je nach gewählten Rückführ-Wertebereich und weiteren Rückführ-Wertebereich der überschüssige Gasstrom der Heißleitung 4 oder der ersten Mitteltemperaturleitung 15 zugeführt werden kann.

Bevorzugt ist die erste Mitteltemperaturleitung 15 eine Leitung, in welcher ein Gasstrom mit einer mittleren Temperatur, insbesondere einer Temperatur des Gasstroms, welche Temperatur zwischen der Temperatur des Gasstroms in der Kaltleitung 5 und der Temperatur des Gasstroms in der Heißleitung 4 liegt, strömt.

Bevorzugt kann der überschüssige Gasstrom in der Auslassleitung 3 der ersten Mitteltemperaturleitung 15 zugeführt werden, wenn die Temperatur des Gasstroms in der Auslassleitung 3 in einem vorgebbaren weiteren Rückführ-Wertebereich liegt. Beispielsweise kann der Gasstrom in der Auslassleitung 3 der ersten Mitteltemperaturleitung 15 zugeführt werden, wenn die Temperatur des Gasstroms in der Auslassleitung 3 zwischen 200 Grad Celsius und 400 Grad Celsius liegt und der Heißleitung 4 zugeführt werden, wenn die Temperatur des Gasstroms zwischen größer 400 Grad Celsius und 800 Grad Celsius liegt, wobei hierbei auch anstatt der Grenze 800 Grad Celsius mathematisch betrachtet "unendlich" gewählt werden kann.

Bevorzugt kann der Betriebs-Gasstrom 32 umfassen: einen Teil eines Gasstroms aus der ersten Mitteltemperaturleitung 15 und einen Teil eines Gasstroms aus der Heißleitung 4, wenn die Soll-Gastemperatur zwischen der Temperatur des Gasstroms in der ersten Mitteltemperaturleitung 15 und der Temperatur des Gasstroms in der Heißleitung 4 ist.

Besonders bevorzugt können zusätzlich zu der ersten Mitteltemperaturleitung 15 weitere Mitteltemperaturleitungen, insbesondere eine zweite Mitteltemperaturleitung 16, vorgesehen sein. Dabei kann bevorzugt vorgesehen sein, dass die Zuleitung 2 mit der zweiten Mitteltemperaturleitung 16 verbunden ist, dass die Temperatur des Gasstroms in der zweiten Mitteltemperaturleitung 16 geringer als die Temperatur des Gasstroms in der ersten Mitteltemperaturleitung 15 und höher als die Temperatur des Gasstroms in der Kaltleitung 5 ist, wobei der Betriebs-Gasstrom 32 zusätzlich zu den Alternativen a bis d umfasst:
e. einen Teil eines Gasstroms aus der zweiten Mitteltemperaturleitung 16 und einen Teil eines Gasstroms aus der Auslassleitung 3, wenn die Soll-Gastemperatur zwischen der Temperatur des Gasstroms in der zweiten Mitteltemperaturleitung 16 und der Temperatur des Gasstroms in der Auslassleitung 3 ist,
wobei der überschüssige Gasstrom in der Auslassleitung 3 der zweiten Mitteltemperaturleitung 16 zugeführt wird, wenn die Temperatur des Gasstroms in der Auslassleitung 3 in einem vorgebbaren zweiten weiteren Rückführ-Wertebereich liegt. Die zweite Mitteltemperaturleitung 16 kann auch als Niedertemperaturleitung bezeichnet werden.

In dieser bevorzugten Ausführungsform ist zusätzlich zu der Heißleitung 4 noch die erste Mitteltemperaturleitung 15 und die zweite Mitteltemperaturleitung 16 vorgesehen. In dieser bevorzugten Ausführungsform umfasst der Betriebs-Gasstrom 32 die Alternativen a bis e. Bis auf die zu berücksichtigende erste Mitteltemperaturleitung 15 und die zweite Mitteltemperaturleitung 16 und die Heißleitung 4 funktioniert die Regelung des Betriebs-Gasstroms 32 auf die gleiche Weise wie bei dem oben beschriebenen Beispiel mit lediglich der Heißleitung 4.

Bevorzugt ist die zweite Mitteltemperaturleitung 16 eine Leitung, in welcher wie in der ersten Mitteltemperaturleitung 15 ein Gasstrom mit einer zweiten mittleren Temperatur strömt. Die Temperatur des Gasstroms in der zweiten Mitteltemperarturleitung 16 ist dabei zwischen der Temperatur des Gasstroms in der Kaltleitung 5 und der Temperatur des Gasstroms in der ersten Mitteltemperaturleitung 15.

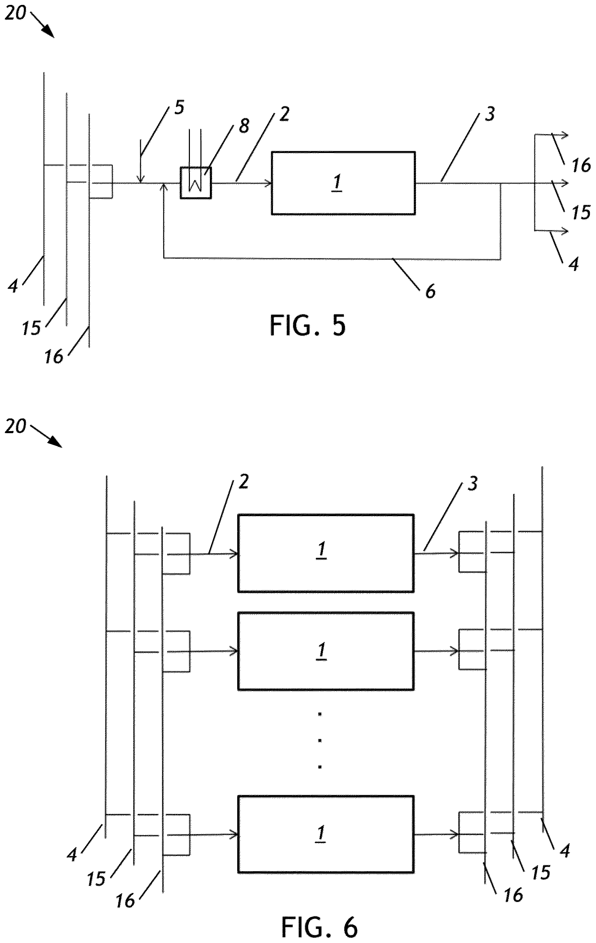

In der Fig. 5 ist eine erste schematische Darstellung des Systems 20 umfassend den Chargenofen 1, die Heißleitung 4, die Kaltleitung 5, die erste Mitteltemperaturleitung 15 und die zweite Mitteltemperaturleitung 16 beispielhaft gezeigt. Die Zuleitung 2 ist mit der Kaltleitung 5 und mit der Rückführleitung 6 verbunden. Hierbei kann beispielsweise ein Gasstrom in der Heißleitung 4 eine Temperatur von 800 Grad Celsius, ein Gasstrom in der ersten Mitteltemperaturleitung 15 eine Temperatur von 600 Grad Celsius, ein Gasstrom in der zweiten Mitteltemperaturleitung 16 eine Temperatur von 400 Grad Celsius und ein Gasstrom in der Kaltleitung 5 eine Temperatur von 25 Grad Celsius aufweisen. Die Regeleinrichtung regelt dabei den Betriebs-Gasstrom 32 gemäß der Alternativen a bis e. Die Abwärmeleitung 25 ist in Fig. 5 nicht ersichtlich.

Besonders bevorzugt kann vorgesehen sein, dass wenigstens drei Chargenöfen 1 mit jeweils einem Besatzraum 29 betrieben werden, wobei der erste Chargenofen 17 der drei Chargenöfen 1 einen Beladezustand aufweist, wobei der zweite Chargenofen 18 der drei Chargenöfen 1 in der aktiven Brennphase 9 betrieben wird und wobei ein dritter Chargenofen 19 der drei Chargenöfen 1 in der passiven Brennphase 13 betrieben wird. Dadurch können die drei oder mehr Chargenöfen 1 besonders energieeffizient betrieben werden, da die Abwärme beim Kühlen der Formlinge 36 in der passiven Brennphase 13 eines Chargenofens 1 zum Erhitzen des Besatzraums 29 des anderen Chargenofens 1 verwendet werden kann. Hierbei kann besonders bevorzugt die Zeit der aktiven Brennphase 9, der passiven Brennphase 13 und des Beladevorgangs im Wesentlichen gleich sein.

Der Betrieb der wenigstens drei Chargenöfen 1, 17, 18, 19 kann dabei anhand Fig 1 mit der Heißleitung 4 und Fig. 3 wie folgt verstanden werden. Fig. 3 zeigt ein zweites Temperatur-Zeit-Diagramm für den Betrieb von drei Chargenöfen 1 in schematischer Darstellung. Der erste Chargenofen 17 befindet sich in Fig. 3 zum Zeitpunkt Null im Beladezustand, sodass der Besatzraum 29 dieses Chargenofens 1 mit Formlingen 36 bestückt oder die Formlinge 36 aus dem Besatzraum 29 entfernt werden können. Bei dem ersten Chargenofen 17 wird daher kein Betriebs-Gasstrom 32 über die Zuleitung 2 zugeführt. Der dritte Chargenofen 19 befindet sich zum Zeitpunkt Null am Anfang der passiven Brennphase 13. Dabei ist, wie in Fig. 2 ersichtlich ist, die Temperatur des Gasstroms in der Auslassleitung 3 höher als die Soll-Gastemperatur, sodass der Betriebs-Gasstrom 32 gemäß Alternative c eingestellt wird, und hierbei lediglich ein Teil eines Gasstroms aus der Kaltleitung 5 des Besatzraums 29 zugeführt wird. Sobald die Temperatur des Gasstroms in der Auslassleitung 3 in dem vorgebbaren Rückführ-Wertebereich liegt, wird der Gasstrom in der Auslassleitung 3 der Heißleitung 4 zugeführt. Der zweite Chargenofen 18 befindet sich zum Zeitpunkt Null am Anfang der aktiven Brennphase 9, wobei dieser im weiteren Verlauf den der Heißleitung 4 zugeführten Gasstrom des dritten Chargenofens 19 verwenden kann. Dadurch kann ein großer Teil einer freiwerdenden Wärme in dem dritten Chargenofen 19 von dem zweiten Chargenofen 18 verwendet werden und die drei Chargenöfen 1 besonders effizient betrieben werden. Die Nutzung dieser freiwerdenden Wärme ist dabei in Fig. 3 mit den senkrechten Pfeilen beispielhaft gezeigt. Sobald der zweite Chargenofen 18 die passive Brennphase 13 erreicht, startet der erste Chargenofen 17 die aktive Brennphase 9 und der dritte Chargenofen 19 geht in den Beladezustand, usw. Wie anhand dieses Beispiels ersichtlich ist, wird bei dem Betrieb der wenigstens drei Chargenöfen 1 keine externe Bereitstellung eines Gasstroms für die Heißleitung 4, beispielsweise über eine externe Heizung und einen externen Ventilator oder über eine Fernwärmeleitung, benötigt, da der Gasstrom in der Heißleitung 4 von dem Chargenofen 1 in der passiven Brennphase 13 zugeführt wird.

In Fig. 6 ist eine zweite schematische Darstellung des Systems 20 umfassend mehrere Chargenöfen 1 und drei Leitungen 4, 15, 16 beispielhaft gezeigt. Die Fig. 6 zeigt dabei eine stark vereinfachte Darstellung. Es ist ersichtlich, dass die einzelnen Chargenöfen 1 über die Heißleitung 4, die erste Mitteltemperaturleitung 15 und die zweite Mitteltemperaturleitung 16 miteinander gekoppelt sind, sodass jeder Chargenofen 1 einen Gasstrom in die drei Leitungen 4, 15, 16 einspeisen oder auch daraus beziehen kann. Die drei gezeigten Leitungen 4, 15, 16 auf der linken Seite von Fig. 6, also die Heißleitung 4, die erste Mitteltemperaturleitung 15 und die zweite Mitteltemperaturleitung 16 aus die die Chargenöfen 1 einen Gasstrom beziehen können, sind dabei dieselben Leitungen 4, 15, 16 in die die Chargenöfen 1 einspeisen können, also welche auf der rechten Seite von Fig. 6 dargestellt sind.

In Fig. 4 ist eine zweite bevorzugte Ausführungsform des Systems 20 umfassend fünf Chargenöfen, eine Heißleitung 4, eine erste Mitteltemperaturleitung 15, eine Kaltleitung 5 und eine Abwärmeleitung 25 beispielhaft gezeigt, wobei die einzelnen Chargenöfen 1 über die gezeigten Leitungen, insbesondere die Heißleitung 4, die erste Mitteltemperaturleitung 15, die Kaltleitung 5 und die Abwärmeleitung 25 miteinander gekoppelt sind. Dabei kann durch die Steuerung der aktiven Brennphase 9 und der passiven Brennphase 13 der einzelnen Chargenöfen 1 erreicht werden, dass immer ein Chargenofen 1 in der passiven Brennphase 13 betrieben wird, während ein anderer Chargenofen 1 in der aktiven Brennphase 9 betrieben wird. Dadurch können die Chargenöfen 1 besonders energieeffizient betrieben werden. Die nicht genutzte Wärme der Chargenöfen 1 kann dabei über die gemeinsame Abwärmeleitung 25 der Chargenöfen 1 abgeführt werden.

Im Fall von fünf Chargenöfen, wie dies in Fig. 4 gezeigt ist, kann bevorzugt vorgesehen sein, dass die Zeit im Beladezustand des jeweiligen Chargenofens 1 der Hälfte der Zeit der aktiven Brennphase 9 und/oder der Hälfte der Zeit der passiven Brennphase 13 des jeweiligen Chargenofens 1 entspricht. In diesem Fall kann, wenn alle Chargenöfen dieselbe Zeitdauer für die jeweilige aktive Brennphase 9 und die jeweilige passive Brennphase 13 vorsehen, erreicht werden, dass immer gleichzeitig ein Chargenofen 1 in der aktiven Brennphase 9 und ein Chargenofen 1 in der passiven Brennphase 13 sind. Weiters kann dadurch erreicht werden, dass der eine in der aktiven Brennphase 9 befindliche Chargenofen 1 derart lange in der aktiven Brennphase 9 ist, wie der andere Chargenofen 1 in der passiven Brennphase 13 ist, sodass immer die Abwärme eines Chargenofens 1 für einen anderen Chargenofen 1 verwendet werden kann.

Bevorzugt kann der Chargenofen 1, insbesondere der Besatzraum 29, mit einer Druckausgleichsleitung 27 verbunden sein.

Bevorzugt kann die Druckausgleichsleitung 27 mit der Heißleitung 4 und/oder der ersten Mitteltemperaturleitung 15 und/oder der zweiten Mitteltemperaturleitung 16 verbunden sein.

Bevorzugt kann die Druckausgleichsleitung 27 eine Armatur 28, insbesondere ein Absperrventil oder ein Druckausgleichsventil, umfassen. Dadurch kann bevorzugt der Druck in den Leitungen 4, 15, 16 eingestellt werden, sodass beispielsweise ein Überdruck in der Heißleitung 4 mittels der Armatur 28 reduziert werden kann. Die Druckausgleichsleitung 27 und die Armatur 28 sind beispielhaft in den Fig. 1 und 4 ersichtlich.

Bevorzugt kann die Heizvorrichtung 8 eine elektrische Heizung oder eine Gasheizung sein. Einer Fachperson sind Heizvorrichtungen 8 für den erfindungsgemäßen Gebrauch, also zum Erhitzen des Betrieb-Gasstroms 32 vor dem Zuführen des Besatzraums 29, bekannt, sodass auf eine detailliertere Beschreibung der Heizvorrichtung 8 an dieser Stelle verzichtet wird.

Bevorzugt ist die Heizvorrichtung 8 in der Zuleitung 2 angeordnet. Dadurch kann der Gasstrom aus den Leitungen, insbesondere aus der Heißleitung 4, der ersten Mitteltemperaturleitung 15, der zweiten Mitteltemperaturleitung 16 und der Auslassleitung 3, erforderlichenfalls in der Zuleitung 2 auf den Betriebs-Gasstrom 32 erhitzt und anschließend dem Besatzraum 29 zugeführt werden.

Bevorzugt kann der wenigstens eine Chargenofen 1 einen Ventilator 26 für das Zuführen des Betriebs-Gasstroms 32 in den Besatzraum 29 umfassen. Der Ventilator 26 ist beispielhaft in den Fig. 1 und 4 gezeigt.

Wie oben bereits dargelegt wurde, kann bei mehreren Chargenöfen 1 ein Chargenofen 1 die Wärme eines anderen Chargenofens 1 für die aktive Brennphase 9 nutzen. Bevorzugt kann jedoch auch vorgesehen sein, dass mittels einer in den Fig. 1 und 4 bis 7 nicht gezeigten Heizvorrichtung und einem Ventilator ein Gasstrom für die Heißleitung 4 und/oder die erste Mitteltemperaturleitung 15 und/oder die zweite Mitteltemperaturleitung 16 erzeugt und zugeführt wird. Beispielsweise kann hierbei auch der Gasstrom in der Heißleitung 4 und/oder die erste Mitteltemperaturleitung 15 und/oder die zweite Mitteltemperaturleitung 16 aus einer Fernwärmeleitung zugeführt werden.

Nachfolgend werden Grundsätze für das Verständnis und die Auslegung gegenständlicher Offenbarung angeführt.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

Ein "im Wesentlichen" in Verbindung mit einem Zahlenwert mitumfasst eine Toleranz von ± 10% um den angegebenen Zahlenwert, sofern es sich aus dem Kontext nicht anders ergibt.

Bei Wertebereichen sind die Endpunkte mitumfasst, sofern es sich aus dem Kontext nicht anders ergibt.

## Patentansprüche

1. Verfahren zum Betreiben von wenigstens einem Chargenofen (1) mit eine Besatzraum (29), wobei der Besatzraum (29) des Chargenofens (1) einen Gaseinlass (30) und einen Gasauslass (31) aufweist, wobei der Gaseinlass (30) mit einer Zuleitung (2) und der Gasauslass (31) mit einer Auslassleitung (3) verbunden ist, wobei die Zuleitung (2) mit einer Heißleitung (4), mit einer Kaltleitung (5) und über eine Rückführleitung (6) mit der Auslassleitung (3) verbunden ist, wobei in der Zuleitung (2) ein Betriebs-Gasstrom (32) gemäß einer Soll-Gastemperatur einer Soll-Gastemperatur-Kurve (7) mittels einer Regeleinrichtung eingestellt wird,
wobei der Betriebs-Gasstrom (32) umfasst:
a. einen Teil eines Gasstroms aus der Heißleitung (4) und einen Teil eines Gasstroms aus der Auslassleitung (3), wenn die Soll-Gastemperatur zwischen der Temperatur des Gasstroms in der Heißleitung (4) und der Temperatur des Gasstroms in der Auslassleitung (3) ist,
oder
b. einen Teil eines Gasstroms aus der Heißleitung (4) und einen Teil eines Gasstroms aus der Auslassleitung (3), wenn die Soll-Gastemperatur zumindest höher als die Temperatur des Gasstroms in der Heißleitung (4) und der Temperatur des Gasstroms in der Auslassleitung (3) ist, wobei der Betriebs-Gasstrom (32) vor dem Zuführen in den Besatzraum (29) mittels einer Heizvorrichtung (8) für den Chargenofen (1) auf die Soll-Gastemperatur erhitzt wird,
oder
c. einen Teil eines Gasstroms aus der Kaltleitung (5) und einen Teil eines Gasstroms aus der Auslassleitung (3), wenn die Soll-Gastemperatur geringer als die Temperatur des Gasstroms in der Auslassleitung (3) ist,
wobei der überschüssige Gasstrom in der Auslassleitung (3) der Heißleitung (4) zugeführt wird, wenn die Temperatur des Gasstroms in der Auslassleitung (3) in einem vorgebbaren Rückführ-Wertebereich liegt.

2. Verfahren nach Anspruch 1, **dadurch gekennzeichnet, dass** bei der Einstellung des Betriebs-Gasstroms (32) die Steigung der Soll-Gastemperatur in der Soll-Gastemperatur-Kurve (7) berücksichtigt wird.

3. Verfahren nach Anspruch 1 oder 2, **dadurch gekennzeichnet, dass** die Soll-Gastemperatur-Kurve (7) eine aktive Brennphase (9) umfassend eine Aufheizzeit (10), eine Haltezeit (11) und eine Abkühlzeit (12) umfasst.

4. Verfahren nach Anspruch 3, **dadurch gekennzeichnet, dass** die Aufheizzeit (10) und die Abkühlzeit (12) im Wesentlichen dieselbe Zeitdauer aufweisen.

5. Verfahren nach einem der Ansprüche 1 bis 4, **dadurch gekennzeichnet, dass** die Soll-Gastemperatur-Kurve (7) eine passive Brennphase (13) umfassend eine Kühlzeit (14) umfasst.

6. Verfahren nach Anspruch 3 oder 4 und 5, **dadurch gekennzeichnet, dass** die Dauer der aktiven Brennphase (9) im Wesentlichen der Dauer der passiven Brennphase (13) entspricht.

7. Verfahren nach einem der Ansprüche 1 bis 6, **dadurch gekennzeichnet, dass** der Betriebs-Gasstrom (32) durch einen in dem Besatzraum (29) angeordneten Formlingstapel (33) strömt und mit dem Formlingstapel (33) Wärme austauscht, wobei der Formlingstapel (33) eine erste gemittelte Oberflächentemperatur an einem dem Gaseinlass (30) zugewandten ersten Ende (34) und eine zweite gemittelte Oberflächentemperatur an einem dem Gasauslass (31) zugewandten zweiten Ende (35) aufweist, wobei die Ausbildung des Formlingstapels (33) derart gewählt wird, dass die maximale zweite gemittelte Oberflächentemperatur um eine vorgebbare Brennvorgangszeit später als die maximale erste gemittelte Oberflächentemperatur erreicht wird.

8. Verfahren nach einem der Ansprüche 1 bis 7, **dadurch gekennzeichnet, dass** die Zuleitung (2) mit einer ersten Mitteltemperaturleitung (15) verbunden ist, dass die Temperatur des Gasstroms in der ersten Mitteltemperaturleitung (15) geringer als die Temperatur des Gasstroms in der Heißleitung (4) und höher als die Temperatur des Gasstroms in der Kaltleitung (5) ist, dass der Betriebs-Gasstrom (32) zusätzlich zu den Alternativen a bis c umfasst:
d. einen Teil eines Gasstroms aus der ersten Mitteltemperaturleitung (15) und einen Teil eines Gasstroms aus der Auslassleitung (3), wenn die Soll-Gastemperatur zwischen der Temperatur des Gasstroms in der ersten Mitteltemperaturleitung (15) und der Temperatur des Gasstroms in der Auslassleitung (3) ist,
dass der überschüssige Gasstrom in der Auslassleitung (3) der ersten Mitteltemperaturleitung (15) zugeführt wird, wenn die Temperatur des Gasstroms in der Auslassleitung (3) in einem vorgebbaren weiteren Rückführ-Wertebereich liegt.

9. Verfahren nach Anspruch 3 und 5 bis 8, **dadurch gekennzeichnet, dass** wenigstens drei Chargenöfen (1) mit jeweils einem Besatzraum (29) betrieben werden, dass ein erster Chargenofen (17) der drei Chargenöfen (1) einen Beladezustand aufweist, dass ein zweiter Chargenofen (18) der drei Chargenöfen (1) in der aktiven Brennphase (9) betrieben wird und dass ein dritter Chargenofen (19) der drei Chargenöfen (1) in der passiven Brennphase (13) betrieben wird.

10. System (20) umfassend wenigstens einen Chargenofen (1) mit eine Besatzraum (29) und eine Regeleinrichtung, wobei der Besatzraum (29) des Chargenofens einen Gaseinlass (30) und einen Gasauslass (31) aufweist, wobei der Gaseinlass (30) mit einer Zuleitung (2) und der Gasauslass (31) mit einer Auslassleitung (3) verbunden ist, wobei die Zuleitung (2) mit einer Heißleitung (4), mit einer Kaltleitung (5) und über eine Rückführleitung (6) mit der Auslassleitung (3) verbunden ist, wobei die Regeleinrichtung dazu ausgebildet ist den Chargenofen (1) nach einem Verfahren gemäß der Ansprüche 1 bis 9 zu betreiben.
